# EUROPEAN PATENT APPLICATION

(11) **EP 4 667 192 A1**
(43) Date of publication of application: **24.12.2025**
(21) Application number: 25181951.2
(22) Date of filing: 11.06.2025
(51) Int. Cl.: B29C 65/14, B29C 65/18, B29C 65/00, B29L 31/30

(54) **MANIFOLD AND METHOD FOR MANUFACTURING MANIFOLD**

(30) Priority: 20.06.2024 JP 2024099438
(71) Applicant: AISIN CORPORATION, Kariya, Aichi 448-8650 (JP)
(72) Inventor: ISHIGURO, Masaya, Kariya, 448-8650 (JP); MAEDA, Michitaka, Kariya, 448-8650 (JP); ASAI, Kenta, Kariya, 448-8650 (JP); ESAKI, Yasuhiko, Kariya, 448-8650 (JP); XING, Yuming, Kariya, 448-8650 (JP); SAKURAI, Yu, Kariya, 448-8650 (JP)
(74) Representative: Kramer Barske Schmidtchen Patentanwälte PartG mbB

(57) **Abstract**

A manifold (M) includes a first housing (10) forming a first opening portion (S1) and a second housing (20) forming a second opening portion (S2). Each joint surface (SW) of the first opening portion (S1) and the second opening portion (S2) is welded to each other, thereby integrating the first housing (10) and the second housing (20) with each other and forming a housing (MN) including a fluid space (LS) inside. The housing (MH) includes a rib (R) formed on at least one of an outer peripheral side of an opening edge of the first opening portion (S1) and an outer peripheral side of an opening edge of the second opening portion (S2). The rib (R) protrudes outward along a surface parallel to the joint surface (SW).

## Description

### TECHNICAL FIELD

This disclosure generally relates to a manifold and a method for manufacturing the manifold.

### BACKGROUND DISCUSSION

JP2019-520261A (Reference 1) describes a configuration that includes a first section and a second section joined to each other in order to function as an integrated coolant bottle assembly including a reservoir for storing a cooling medium or allowing a flow of the cooling medium.

Reference 1 describes joining, coupling, or connecting at a reservoir interface where the first section of the reservoir and the second section of the reservoir are joined to each other. According to Reference 1, a specific configuration of such joining, coupling, or connecting for joining the two sections of the reservoir to each other is a welded interface, an adhesive interface, a hot formed interface, a hot plate welded interface, a heat welded interface, a sonic welded interface, an ultrasonic welded interface, or the like.

For example, a manifold for controlling a flow of a coolant in a vehicle can be assumed to have a configuration including a housing, an input port, an output port, a valve unit, and a pump unit. The housing allows a fluid to flow in the housing. The input port is formed in the housing. The fluid is supplied to the input port from an outside. The output port is formed in the housing. The output port sends out the fluid. The valve unit switches a flow path. The pump unit pressures the fluid, and causes the pressured fluid to flow.

In this manifold, it is also conceivable that two members made of thermoplastic resin are joined to each other by a heat welding technique thereby forming the housing.

However, when the two members forming the housing are manufactured by molding, at least one of the two members is slightly deformed in some cases. When the two members having incorrect shapes due to such deformation are welded to each other, there is a possibility that the two members cannot be joined to each other in a state of being in proper close contact with each other (in other words, a sufficient welded area cannot be secured) and a weld strength between the joint surfaces is decreased.

There is concern that the housing with the thus-decreased weld strength between the joint surfaces develops a crack when used.

A need thus exists for a manifold whose weld strength is prevented from being reduced even when a joint surface of a member constituting a housing reduces precision, and for a method for manufacturing the manifold.

### SUMMARY

A manifold according to this disclosure includes a first housing and a second housing. The first housing forms a first opening portion. The second housing forms a second opening portion. Each joint surface of the first opening portion and the second opening portion is welded to each other. Thereby, the first housing and the second housing are integrated with each other, and form a housing including a fluid space inside. The housing includes a rib formed on at least one of an outer peripheral side of an opening edge of the first opening portion and an outer peripheral side of an opening edge of the second opening portion. The rib protrudes outward along a surface parallel to the joint surfaces.

According to this configuration, even in a condition that one of the first housing and the second housing is deformed and the first opening portion and the second opening portion are not in proper close contact with each other, for example, pressure can be applied to the rib in a direction of pressure-bonding the first opening portion and the second opening portion to each other, at a time of joining by the heat welding. Applying the pressure in this manner enables the welding in a state where the first opening portion and the second opening portion are in proper close contact with each other. Thus, a sufficient welded area can be secured. Thereby, even when the joint surface of the member constituting the housing reduces precision, the manifold whose weld strength is prevented from being reduced can be configured.

A method for manufacturing a manifold according to this disclosure is a method for manufacturing the above-described manifold, and includes a heating step and a pressure-bonding step. The heating step includes heating the joint surface of the first opening portion in the first housing and the joint surface of the second opening portion in the second housing in such a way that a temperature of each of the joint surfaces becomes a melting temperature. The pressure-bonding step includes pressure-bonding the joint surface of the first opening portion and the joint surface of the second opening portion to each other after the heating step. The pressure-bonding step includes applying force to the rib in a direction perpendicular to the joint surfaces.

According to this formation, at the heating step, a temperature of each of the joint surface of the first opening portion and the joint surface of the second opening portion is raised to the melting temperature. At the next pressure-bonding step, the joint surface of the first opening portion and the joint surface of the second opening potion are pressure-bonded to each other, and in conjunction with this pressure-bonding, the force is applied to the rib in the direction perpendicular to the joint surfaces. For this reason, in this formation, the joint surfaces can be joined to each other in a state of sufficiently contacting with each other. In other words, even when at least one of the first housing and the second housing is deformed and the joint surface of the first opening portion and the joint surface of the second opening portion are not in proper close contact with each other, applying the pressure to the rib enables the joint surfaces to be joined to each other in a state of contacting with each other. Thus, even when the joint surface of the member constituting the housing reduces precision, the method for manufacturing the manifold whose weld strength is prevented from being reduced can be formed.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of a manifold;
Fig. 2 is a sectional view illustrating a region of a flow path switching valve of the manifold;
Fig. 3 is a sectional view of an upper housing and a lower housing in a welded state;
Fig. 4 is a sectional view of the upper housing and the lower housing yet to be welded to each other;
Fig. 5 is a perspective view of the upper housing and the lower housing in a separated state;
Fig. 6 is a sectional view illustrating a first opening portion and a second opening portion at a heating step; and
Fig. 7 is a sectional view illustrating the first opening portion and the second opening portion at a welding step.

### DETAILED DESCRIPTION

The following describes an embodiment of a manifold according to this disclosure and an embodiment of a method for manufacturing the manifold according to this disclosure, with reference to the drawings. The manifold controls a flow of fluid for exchanging heat of a battery or the like in an electric vehicle, as described below. However, the manifold is not limited to the following embodiment, and can be variously modified without departing from the essence of this disclosure.

### [Basic Configuration]

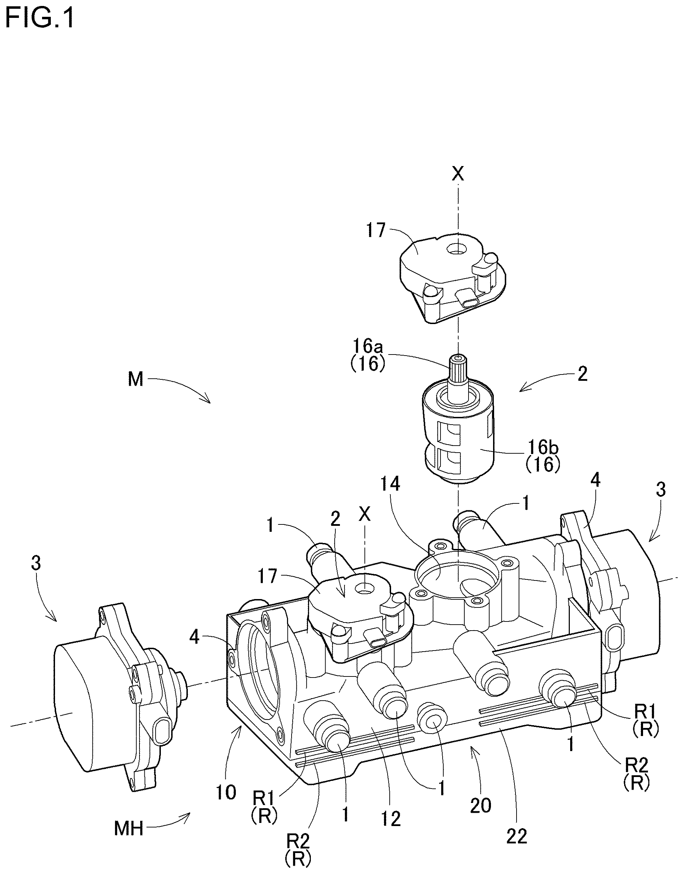

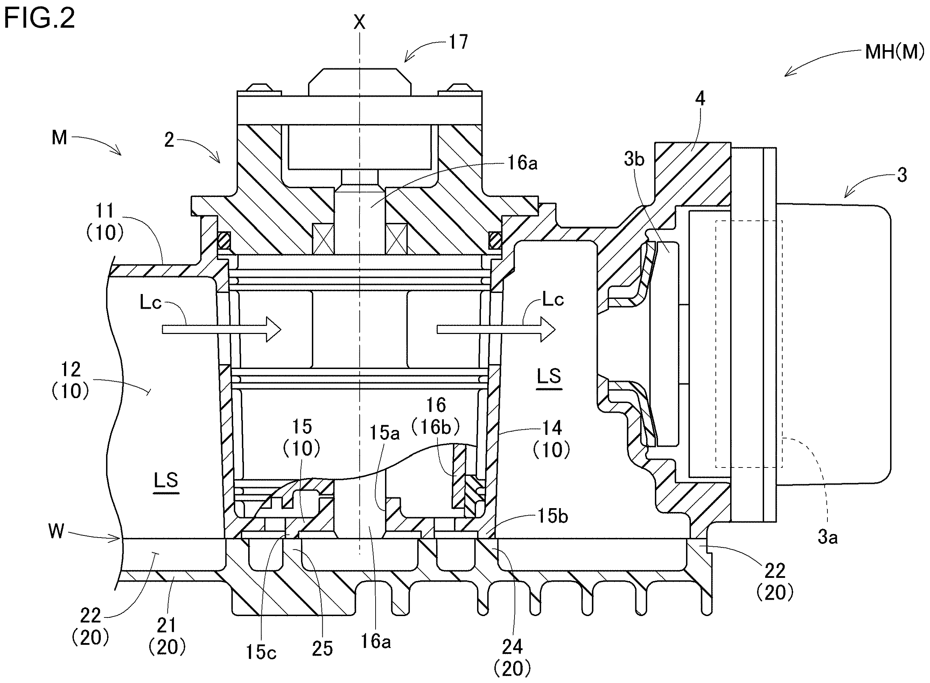

As illustrated in Fig. 1 and Fig. 2, the manifold M is configured to include a housing MH including a plurality of tubular ports 1, a pair of flow path switching valves 2, and a pair of pumps 3. This manifold M supplies, by drive of the pumps 3, fluid Lc to a flow passage chamber LS (one example of a fluid space) formed in the housing MH, and controls a flow of the fluid Lc by the flow path switching valves 2.

The manifold M is mounted on an electrically powered vehicle (hereinafter, also referred to as "electric vehicle") that runs by electric power. The manifold M is configured to enable the fluid Lc to circulate between a cooling target (not illustrated in the drawings) and a heat dissipation unit (not illustrated in the drawings). Examples of the cooling target include a battery, an inverter, and a running motor (not illustrated in the drawings) that are mounted on the electric vehicle. Examples of the heat dissipation unit include a radiator and a chiller.

The running motor is a running drive source. Electric power is supplied to the running drive source, and thereby, the running drive source can cause the electric vehicle to run. The inverter converts direct-current power from the battery into three-phase alternating-current power, and supplies the alternating-current power to the running motor. The battery is configured as a rechargeable secondary battery, and supplies electric power to the inverter and the like, depending on necessity.

Examples of the electric vehicle include a hybrid electric vehicle (HEV), a plug-in hybrid electric vehicle (PHEV), a battery electric vehicle (BEV), a fuel cell electric vehicle (FCEV), and the like.

Cooling fluid such as a long-life coolant (LLC) is used as the fluid Lc in the manifold M. The fluid Lc is not limited to the cooling fluid such as the long-life coolant (LLC), and may be a refrigerant such as insulating oil of a paraffin type or the like, hydrofluorocarbon (HFC), or hydrofluoroolefin (HFO).

### [Manifold]

Although the housing MH constituting the manifold M can be used in an arbitrary orientation, the housing MH in this embodiment is provided, in the electric vehicle, in the orientation illustrated in Fig. 1 and

Fig. 2. In this embodiment, an up-down relation of the manifold M, a positional relation of respective portions, and the like are described based on this orientation.

As illustrated in Fig. 1 to Fig. 4, the housing MH includes an upper housing 10 (one example of a first housing) made of a thermoplastic resin and a lower housing 20 (one example of a second housing) made of the same thermoplastic resin material as that of the upper housing 10. The upper housing 10 and the lower housing 20 are integrated with each other by a heat welding technique. Thereby, the flow passage chamber LS (fluid space) is formed inside the housing MH.

The upper housing 10 (first housing) and the lower housing 20 (second housing) are molded products made of the glass fiber reinforced thermoplastic resin. However, fibers used for the reinforcement are not limited to glass fibers, and may be high-strength fibers such as carbon fibers.

### [Manifold: Upper Housing]

As illustrated in Fig. 1 to Fig. 5, the upper housing 10 yet to be welded has an upper wall portion 11 as an upper portion, a first outer wall portion 12 in the form of a vertical wall at an outer periphery of the upper housing 10, and a plurality of first inner wall portions 13 dividing a space inside the housing. The upper housing 10 forms a first opening portion S1 that opens downward. The upper housing 10 includes a pair of tubular portions 14 formed to extend from the upper wall portion 11 into an inside of the housing, and bottom plate portions 15 formed integrally with respective bottom portions of the tubular portions 14.

As illustrated in Fig. 2, the tubular portion 14 has a plurality of openings that are formed at an outer periphery of the tubular portion 14 and through which the fluid Lc passes. These openings communicate with the flow passage chambers LS (fluid space) outside the openings. The bottom plate portion 15 has a bearing hole 15a formed at a center position of the bottom plate portion 15. The bottom plate portion 15 includes a first annular wall 15b that is provided at an outer periphery of a lower surface of the bottom plate portion 15 and whose center is the vertical axis X, and a second annular wall 15c that is provided on an inner side of the first annular wall 15b and whose center is the vertical axis X. The first annular wall 15b and the second annular wall 15c are formed to protrude downward.

As illustrated in Fig. 1 to Fig. 5, the upper housing 10 has a plurality of the tubular ports 1 that protrude outward from the first outer wall portion 12. The upper housing 10 includes the pump 3 that is fitted into each of opening portions of flange portions 4 at both ends of the upper housing 10 in the longitudinal direction in a plan view. The pump 3 is a unit constituted by an electric motor unit 3a and an impeller portion 3b, and is coupled and fixed to the flange portion 4.

As illustrated in Fig. 1 and Fig. 2, the flow path switching valve 2 includes a valve body 16 accommodated in the tubular portion 14, and a valve drive unit 17 that transmits rotational drive force to an upper end of an operation shaft 16a of the valve body 16. The valve body 16 includes the operation shaft 16a that is coaxial with the vertical axis X, and a wall portion 16b that opens and closes flow paths. The wall portion 16b controls flows of the fluid Lc at the openings of the tubular portion 14 by rotation of the valve body 16 about the vertical axis X.

A lower end of the operation shaft 16a is fitted into the bearing hole 15a of the bottom plate portion 15. Thereby, the flow path switching valve 2 is supported in such a way as to be freely rotatable about the vertical axis X. The valve drive unit 17 is coupled to an upper end of the operation shaft 16a of the valve body 16. The valve drive unit 17 is configured as an electromagnetic drive type unit including a combination of a brushless DC motor and a speed reduction mechanism in order that a rotational amount of the valve body 16 can be set by a control signal. The valve drive unit 17 is coupled to an upper surface of the upper wall portion 11.

A plurality of the tubular ports 1 each communicate with the associated flow passage chamber LS included in a plurality of the flow passage chambers LS in the housing. The pump 3 supplies the fluid Lc, which is supplied from the tubular port 1, to the flow passage chamber LS in a pressurized state. With this configuration, under a condition in which the pump 3 is driven, the manifold M sets a rotational posture of the valve body 16 by drive force of the valve drive unit 17. Thereby, the wall portion 16b controls a flow of the fluid Lc toward the opening of the tubular portion 14 so that the fluid Lc flowing through the flow passage chamber LS is sent out to one of a plurality of the tubular ports 1.

Meanwhile, the fluid Lc having increased in temperature after cooling is subjected to heat dissipation by the radiator, the chiller, or the like, and is then returned to the tubular port 1 provided on a suction side.

### [Manifold: Lower Housing]

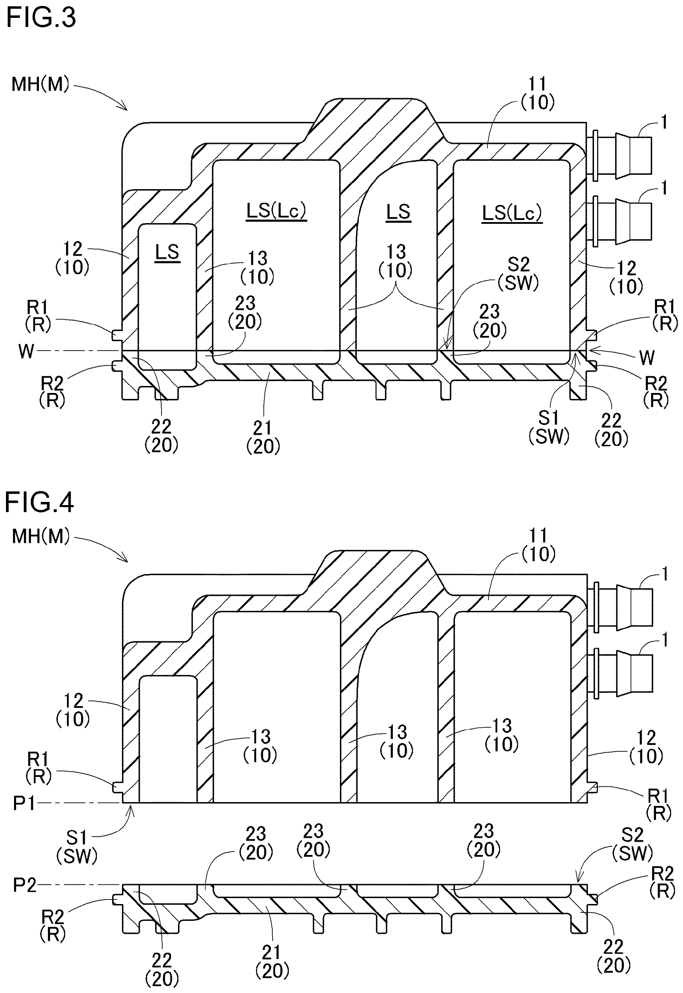

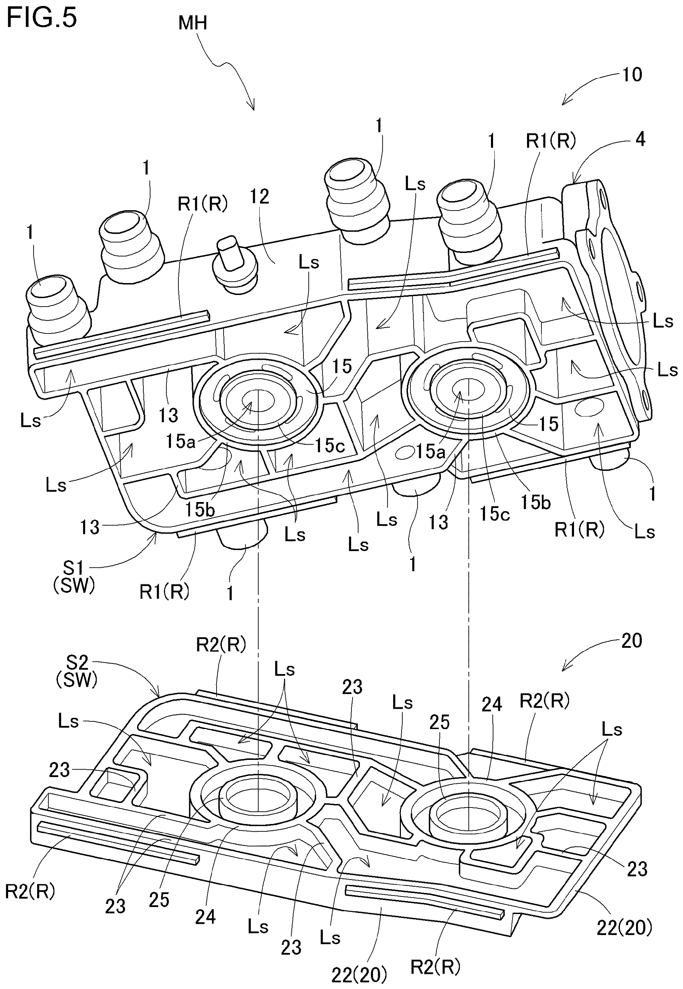

As illustrated in Fig. 4 and Fig. 5, the lower housing 20 yet to be welded includes a bottom wall portion 21 at a bottom of the lower housing 20, a second outer wall portion 22 in the form of a vertical wall at an outer periphery of the lower housing 20, and a plurality of second inner wall portions 23 dividing a space inside the housing. The lower housing 20 forms a second opening portion S2 that opens upward. The lower housing 20 includes a first annular portion 24 and a second annular portion 25 that are formed on a side of an upper surface of the bottom wall portion 21 in such a way as to be integrated with the bottom wall portion 21.

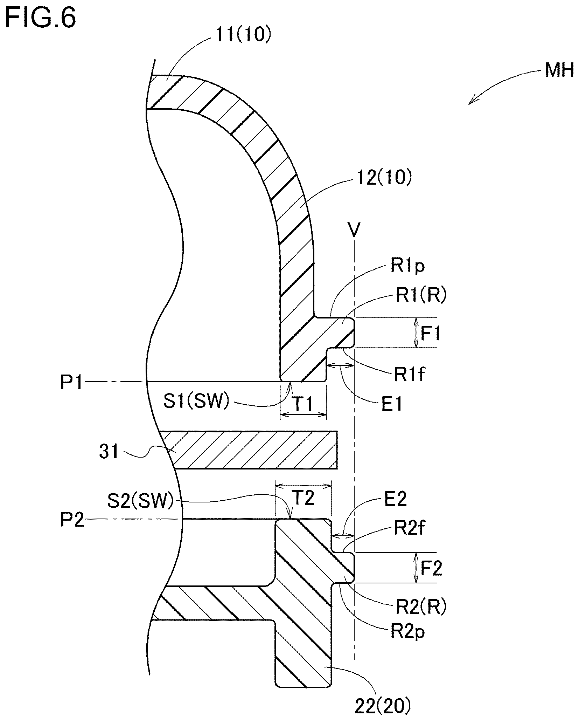

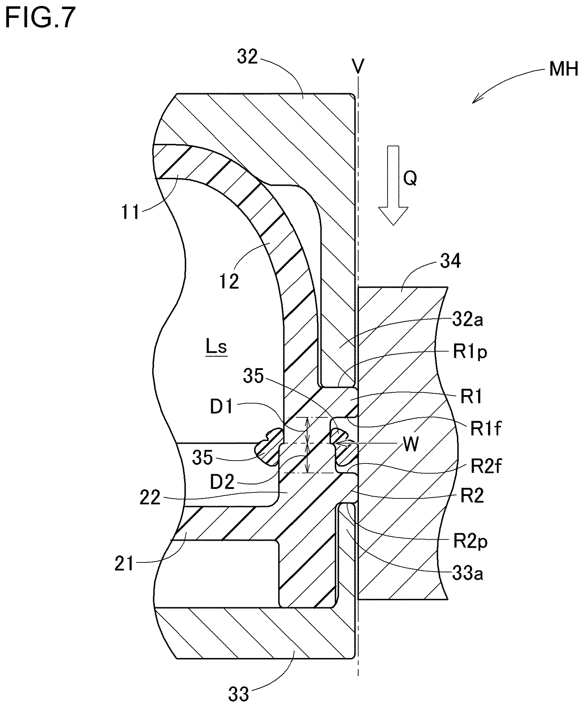

In this embodiment, as illustrated in Fig. 6 and Fig. 7, a thickness (first thickness T1) of a joint surface SW located at the first opening portion S1 and formed by a lower end of the first outer wall portion 12 differs from a thickness (second thickness T2) of a joint surface SW located at the second opening portion S2 and formed by an upper surface of the second outer wall portion 22. However, in Fig. 3 and Fig. 4, the sectional shapes are conceptually illustrated, and thus, the respective thicknesses are depicted as being equal to each other.

As illustrated in Fig. 4, in a plan view in a state where the upper housing 10 is superposed above the lower housing 20, the second outer wall portion 22 is located to overlap with the first outer wall portion 12, and a plurality of the second inner wall portions 23 are each located to overlap with the associated first inner wall portion 13 included in a plurality of the first inner wall portions 13. The first annular portion 24 is located to overlap with the first annular wall 15b, and the second annular portion 25 is located to overlap with the second annular wall 15c.

### [Manifold: First Opening Portion and Second Opening Portion]

As illustrated in Fig. 4 to Fig. 6, the upper housing 10 forms the first opening portion S1 that opens downward. In the first opening portion S1, a lower end surface of the first outer wall portion 12, a lower end surface of the first inner wall portion 13, a lower end surface of the first annular wall 15b, and a lower end surface of the second annular wall 15c are exposed. These are arranged on the same plane as a single first imaginary plane P1.

The lower housing 20 forms the second opening portion S2 that opens upward. In the second opening portion S2, an upper end surface of the second outer wall portion 22, an upper end surface of the second inner wall portion 23, an upper end surface of the first annular portion 24, and an upper end surface of the second annular portion 25 are exposed. These are arranged on the same plane as a single second imaginary plane P2.

### [Housing in Joined State]

As illustrated in Fig. 2 and Fig. 3, the housing MH is a structure in which the upper housing 10 and the lower housing 20 have been integrated with each other by heat-welding the first opening portion S1 and the second opening portion S2 to each other. Particularly, a part where the first opening portion S1 and the second opening portion S2 have been joined to each other by the heat welding is referred to as a welded surface W in some cases.

In the following description, the surfaces of the first opening portion S1 and the second opening portion S2 yet to be welded to each other are referred to as joint surfaces SW in some cases.

The housing MH integrated by the heat welding in the above-described manner includes an integrated outer wall part formed by heat-welding the lower end of the first outer wall portion 12 to the upper end of the second outer wall portion 22. The joint surface SW of the lower end of the first inner wall portion 13 is heat-welded to the joint surface SW of the upper end of the second inner wall portion 23. Thereby, the housing MH forms a plurality of the flow passage chambers LS formed in a state of being divided from each other.

Further, the lower end (joint surface SW) of the first annular wall 15b and the upper end (joint surface SW) of the first annular portion 24 are integrated with each other by the heat welding. The lower end (joint surface SW) of the second annular wall 15c and the upper end (joint surface SW) of the second annular portion 25 are integrated with each other by the heat welding.

The housing MH is formed in this manner, and the manifold M is thereby configured to be able to supply and discharge the fluid Lc. In other words, as partially described above, a plurality of the tubular ports 1 communicate with a plurality of the flow passage chambers LS, and in a state where the pump 3 is driven, the valve drive unit 17 drives the valve body 16 of the flow path switching valve 2, and thereby sets a rotational posture of the valve body 1. As a result, the fluid Lc sucked from the tubular port 1 included in a plurality of the tubular ports 1 and connected to an input side is sent out to the tubular port 1 included in a plurality of the tubular ports 1 and connected to a discharge side.

### [Rib]

The upper housing 10 and the lower housing 20 are deformed in some cases, for example, after being separated from the molds. Such deformation prevents the respective joint surfaces SW of the first opening portion S1 and the second opening portion S2 from being in proper close contact with each other in a state where the upper housing 10 and the lower housing 20 yet to be welded are superposed on each other. As a result, a gap is formed in some cases.

The housing MH forms ribs R. Thereby, the joint surfaces SW of the first opening portion S1 and the second opening portion S2 can be made to closely contact with each other even when at least one of the upper housing 10 and the lower housing 20 has been deformed. Thus, reliable welding can be achieved in such a way as to secure a sufficient welded area, and the weld strength can be prevented from being decreased.

As illustrated in Fig. 3 to Fig. 5, the upper housing 10 forms a plurality of first ribs R1 (one example of the ribs R) along an outer periphery of an opening edge of the first opening portion S1. The lower housing 20 forms a plurality of second ribs R2 (one example of the ribs R) along an outer periphery of an opening edge of the second opening portion S2.

In a plan view in a state where the upper housing 10 and the lower housing 20 are superposed on each other, a plurality of the first ribs R1 and a plurality of the second ribs R2 are located to overlap with each other. In other words, the first ribs R1 and the second ribs R2 face each other in a direction perpendicular to the respective joint surfaces SW of the first opening portion S1 and the second opening portion S2.

When the respective joint surfaces SW of the first opening portion S1 of the upper housing 10 and the second opening portion S2 of the lower housing 20 are heat-welded to each other, a pressure is applied in a direction of making the first opening portion S1 and the second opening portion S2 closely contact with each other. The heat-welding processing is described in the below-described section "Method for Manufacturing Manifold".

As illustrated in Fig. 4 to Fig. 6, the first rib R1 is formed to protrude outward from an outer peripheral side of the opening edge of the first opening portion S1. Specifically, the first rib R1 protrudes, by a first protrusion amount E1, from an outer surface of the first outer wall portion 12 while the first rib R1 has a first rib thickness F1.

The first rib R1 has a first pressure surface R1p on an upper side and a first offset surface R1f on a lower side. The first pressure surface R1p and the first offset surface R1f are formed parallel to the joint surface SW of the first opening portion S1 (also parallel to the first imaginary plane P1). As illustrated in Fig. 7, a distance from the reference welded surface W of the housing MH to the first offset surface R1f of the first rib R1 is set to a first offset amount D1.

As illustrated in Fig. 4 to Fig. 6, the second rib R2 is formed to protrude outward from an outer peripheral side of the opening edge of the second opening portion S2. Specifically, the second rib R2 protrudes, by a second protrusion amount E2, from an outer surface of the second outer wall portion 22 while the second rib R2 has a second rib thickness F2.

The second rib R2 includes a second pressure surface R2p on a lower side and a second offset surface R2f on an upper side. The second pressure surface R2p and the second offset surface R2f are formed parallel to the joint surface SW of the second opening portion S2 (also parallel to the second imaginary plane P2). As illustrated in Fig. 7, a distance from the welded surface W of the housing MH to the second offset surface R2f of the second rib R2 is set to a second offset amount D2.

A lower end position of the first outer wall portion 12 of the upper housing 10 is displaced upward as a result of the welding, and an upper end position of the second outer wall portion 22 of the lower housing 20 is displaced downward as a result of the welding.

Thus, a distance from the lower end position (joint surface SW) of the first outer wall portion 12 to the first offset surface R1f in the upper housing 10 yet to be welded is slightly larger than the first offset amount D1. Similarly to this, a distance from the upper end position (joint surface SW) of the second outer wall portion 22 to the second offset surface R2f in the lower housing 20 yet to be welded is slightly larger than the second offset amount D2.

As illustrated in Fig. 6, when a thickness of the joint surface SW (lower end part) of the first opening portion S1 at the first outer wall portion 12 is defined as the first thickness T1, and a thickness of the joint surface SW (upper end part) of the second opening portion S2 at the second outer wall portion 22 is defined as the second thickness T2, the housing MH is set in such a way that the second thickness T2 is a value larger than the first thickness T1 (relation of T1 < T2).

The joint surface SW of the first opening portion S1 at the first outer wall portion 12 and the joint surface SW of the second opening portion S2 at the second outer wall portion 22 are welded to each other in a positional relation in which respective center positions of these joint surfaces in the thickness direction overlap with each other (the center positions of these joint surfaces in the thickness direction coincide with each other).

A value of the first protrusion amount E1 and a value of the second protrusion amount E2 are set in such a way that a position of a protrusion end of the first rib R1 and a position of a protrusion end of the second rib R2 coincide with each other in a plan view even after the welding is performed. In other words, as illustrated in Fig. 6, the positional relation is set in such a way that the protrusion end of the first rib R1 and the protrusion end of the second rib R2 are positioned to contact with a vertical line V.

### [Method for Manufacturing Manifold]

Fig. 6 illustrates an example of parts that are included in the first opening portion S1 and the second opening portion S2 and in which the joint surface SW of the lower end of the first outer wall portion 12 faces the joint surface SW of the upper end of the second outer wall portion 22.

The method for manufacturing the manifold M includes setting in which the first opening portion S1 of the upper housing 10 (first housing) and the second opening portion S2 of the lower housing 20 (second housing) are made to face each other while being separated from each other in the vertical direction.

The method for manufacturing the manifold M includes a heating step (I) of arranging a plate-shaped heater 31 between the first opening portion S1 of the upper housing 10 and the second opening portion S2 of the lower housing 20 that are set in the state of being separated from each other, and thereby heating the respective joint surfaces SW of the first opening portion S1 and the second opening portion S2 in such a way that a temperature of each of the joint surfaces SW becomes the melting temperature. The method further includes a pressure-bonding step (II) of pressure-bonding the joint surfaces SW of the first opening portion S1 and the second opening portion S2 to each other after the heating step (I).

In the upper housing 10, the joint surface SW of the first opening portion S1 includes the lower end of the first outer wall portion 12, the lower end of the first inner wall portion 13, a lower end of the first annular wall 15b, and a lower end of the second annular wall 15c. In the lower housing 20, the joint surface SW of the second opening portion S2 includes the upper end of the second outer wall portion 22, the upper end of the second inner wall portion 23, an upper end of the first annular portion 24, and an upper end of the second annular portion 25.

As illustrated in Fig. 6, at the heating step (I), the heater 31 is arranged between the first imaginary plane P1 on which the joint surface SW of the first opening portion S1 exists and the second imaginary plane P2 on which the joint surface SW of the second opening portion S2 exists, in a positional relation in which the first imaginary plane P1 and the second imaginary plane P2 are parallel to each other.

At the heating step (I), infrared rays emitted from the heater 31 causes a temperature of each of the joint surface SW of the first opening portion S1 and the joint surface SW of the second opening portion S2 to rise to the melting temperature. The heating step (I) uses the plate-shaped heater 31 including an upper surface and a lower surface that emit the infrared rays.

In this manner, at the time of the heating, in a state where a distance between the upper surface of the heater 31 and the first opening portion S1 is maintained at a set value, and a distance between the lower surface of the heater 31 and the second opening portion S2 is maintained at a set value, the infrared rays are emitted to the part exposed on the first opening portion S1 and the part exposed on the second opening portion S2 in such a way that a temperature of each of these parts reaches the melting temperature.

The processing performed at the pressure-bonding step (II) includes taking out the heater 31 after the heating at the heating step (I) is completed, and pressure-bonding the joint surface SW of the first opening portion S1 and the joint surface SW of the second opening portion S2 to each other as illustrated in Fig. 7.

As illustrated in Fig. 7, the pressure-bonding step (II) uses an upper holder 32 and a lower holder 33. The upper holder 32 supports the upper housing 10, in a state of contacting with an area extending from the upper wall portion 11 to the outer surface of the first outer wall portion 12. The lower holder 33 supports the lower housing 20, in a state of contacting with an area extending from a lower side of the bottom wall portion 21 to the outer surface of the second outer wall portion 22.

The upper holder 32 and the lower holder 33 can also be used in a form of supporting the upper housing 10 and the lower housing 20, respectively, at the stage of the heating step (I).

The upper holder 32 includes a first contact portion 32a formed integrally with the upper holder 32 and contacting against the first pressure surface R1p of the first rib R1. Similarly to this, the lower holder 33 includes a second contact portion 33a formed integrally with the lower holder 33 and contacting against the second pressure surface R2p of the second rib R2.

The pressure-bonding step (II) uses a restriction member 34 at a position of contacting against the protrusion end of the first rib R1 and the protrusion end of the second rib R2. In a reasonable configuration, the restriction member 34 is supported by one of the upper holder 32 and the lower holder 33. The restriction member 34 can also be configured to include a dedicated actuator, a guide mechanism, and the like in such a way that restriction member 34 is set at the position illustrated in Fig. 7.

The pressure-bonding step (II) includes actuation in which the upper housing 10 supported by the upper holder 32 and the lower housing 20 supported by the lower holder 33 are made to relatively approach each other. This actuation makes the welding between the joint surface SW of the first opening portion S1 and the joint surface SW of the second opening portion S2.

Particularly, in a reasonable actuation mode, the pressure-bonding step (II) includes moving one of the lower holder 33 and the upper holder 32 along the pressure application direction Q in a state where the other of the lower holder 33 and the upper holder 32 is fixed, and thereby pressure-bonding the joint surface SW of the first opening portion S1 of the upper housing 10 and the joint surface SW of the second opening portion S2 of the lower housing 20 to each other.

At the time of this pressure-bonding, the first contact portion 32a of the upper holder 32 contacts against the first pressure surface R1p of the first rib R1 formed on an outer side of the opening edge of the first opening portion S1 of the upper housing 10, and thereby applies the downward pressure. Similarly to this, at the time of the pressure-bonding, the second contact portion 33a of the lower holder 33 contacts against the second pressure surface R2p of the second rib R2 formed on an outer side of the opening edge of the second opening portion S2 of the lower housing 20, and thereby applies the upward pressure.

Thereby, even when at least one of the upper housing 10 and the lower housing 20 has been deformed, and the joint surface SW of the first opening portion S1 and the joint surface SW of the second opening portion S2 are not in proper close contact with each other before the welding, the proper welding can be implemented by applying the pressure while correcting the first opening portion S1 and the second opening portion S2 to be in a proper positional relation. Thus, a sufficient welded area can be secured, and the weld strength can be prevented from being decreased.

In the welding of the pressure-bonding step (II), the joint surface SW of the first outer wall portion 12 and the joint surface SW of the second outer wall portion 22 strongly contact with each other, and thereby, the first opening portion S1 and the second opening portion S2 are joined to each other in a state where the resin of the joint surfaces SW is mixed with each other. At the time of the welding, as illustrated in Fig. 7, a part of the resin of the joint surfaces SW of the first opening portion S1 and the second opening portion S2 flows out from the welded portion (welded surface W) to an outside, and thereby forms flash 35.

Although the flash 35 is formed in this manner, a protrusion amount of the flash 35 formed outside the housing MH is restricted by contact of the flash 35 with the restriction member 34.

At the pressure-bonding step (II), the joint surface SW of the first opening portion S1 and the joint surface SW of the second opening portion S2 are pressure-bonded to each other, and this pressure-bonded state is maintained for a set time. After the heat dissipation, the upper holder 32 is moved upward. Thereby, the housing MH including the upper housing 10 and the lower housing 20 integrated with each other by the welding at the welded surface W can be taken out.

### [Advantageous Effects of Embodiment]

As described above, the first rib R1 is formed along the first opening portion S1 of the upper housing 10, the second rib R2 is formed along the second opening portion S2 of the lower housing 20, and the first rib R1 and the second rib R2 face each other in the direction perpendicular to the joint surfaces SW. At the time of the welding, these ribs R are used to apply the pressure to the upper housing 10 along the pressure application direction Q and apply the pressure to the first pressure surface R1p of the first rib R1. At the time of the welding, the pressure is applied to the second pressure surface R2p of the second rib R2 of the lower housing 20 in the direction opposite to the pressure application direction Q.

Thereby, even when at least one of the upper housing 10 and the lower housing 20 has been deformed, the force applied from the first contact portion 32a to the first pressure surface R1p of the first rib R1 and the force applied from the second contact portion 33a to the second pressure surface R2p of the second rib R2 enables the welding in a state where the lower end of the first outer wall portion 12 and the upper end of the second outer wall portion 22 closely contact with each other while the joint surface SW of the first opening portion S1 and the joint surface SW of the second opening portion S2 are corrected to be in a proper positional relation. Thus, a sufficient welded area can be secured, and the weld strength can be prevented from being decreased.

The first rib R1 and the second rib R2 are formed in a positional relation of being parallel to each other. For this reason, even when correction of setting the first opening portion S1 and the second opening portion S2 in a proper positional relation is needed, the correction with high accuracy can be implemented.

The first rib R1 of the upper housing 10 yet to be welded is at a position shifted upward from the lower end of the first outer wall portion 12 by the first offset amount D1. The second rib R2 of the lower housing 20 yet to be welded is at a position shifted downward from the upper end of the second outer wall portion 22 by the second offset amount D2.

In this manner, the ribs R are offset to a side of being shifted from the welded surface W. Thus, at the time of the welding, the force can be concentrated over the first thickness T1 of the first outer wall portion 12 of the first opening portion S1 and the second thickness T2 of the second outer wall portion 22 of the second opening portion S2 so that the reliable joining can be made.

The first rib R1 and the second rib R2 are arranged at the positions offset from the welded surface W. For this reason, for example, even when the first opening portion S1 and the second opening portion S2 are heated for the heat welding, a phenomenon in which the first rib R1 and the second rib R2 are softened by the heat is suppressed. Thus, the strength is not decreased.

In the method for manufacturing the manifold, the heating step (I) and the pressure-bonding step (II) are performed. At the heating step (I), the joint surface SW of the first opening portion S1 of the upper housing 10 (first housing) and the joint surface SW of the second opening portion S2 of the lower housing 20 (second housing) are heated in such a way that a temperature of each of the joint surfaces SW becomes the melting temperature. After the heating step (I), at the pressure-bonding step (II), the joint surface SW of the first opening portion S1 and the joint surface SW of the second opening portion S2 are made to contact with each other in a state of being pressed against each other. At the pressure-bonding step (II), the force is applied to the ribs R in the pressure-bonding direction.

At the pressure-bonding step (II) in the method for manufacturing the manifold, the force is applied in the direction (pressure-bonding direction) in which the first rib R1 and the second rib R2 are made to approach each other. Thereby, even when at least one of the upper housing 10 and the lower housing 20 has been deformed, the first opening portion S1 and the second opening portion S2 are pressured-bonded to each other while being corrected to be in a proper positional relation. Thus, the strong welding can be implemented, a sufficient welded area can be secured, and the weld strength can be prevented from being decreased.

In the method for manufacturing the manifold, even when a part of the resin of the end surface flows out from the welded surface W to an outside by the pressure-bonding between the joint surface SW of the first outer wall portion 12 and the joint surface SW of the second outer wall portion 22 at the pressure-bonding step (II), and thereby forms the flash 35, the restriction member 34 can suppress a protrusion amount of the flash 35. For example, a step of removing the flash 35 can be omitted.

### [Alternative Embodiments]

This disclosure may also be configured as follows, differently from the above-described embodiment (the elements having the same functions as those in the embodiment are denoted by the same reference numerals and signs as those in the embodiment).
(a) The rib R may be formed at only one of the upper housing 10 and the lower housing 20. The rib R may be formed over the entire periphery of at least one of the upper housing 10 and the lower housing 20.
   Even in the configuration where the rib R is formed at only one of the upper housing 10 and the lower housing 20, applying the force to the rib R at the time of the welding can implement the strong welding in which the first opening portion S1 and the second opening portion S2 closely contact with each other. Thus, the welded area can be secured, and the weld strength can be prevented from being decreased.
(b) In the configuration where the first rib R1 is formed at the upper housing 10 and the second rib R2 is formed at the lower housing 20, the first rib R1 and the second rib R2 do not necessarily need to be arranged in the positional relation of overlapping with each other in a plan view, and may be arranged at positions not overlapping with each other in a plan view. In other words, the first rib R1 and the second rib R2 may be arranged at the positions where the first rib R1 and the second rib R2 do not face each other in the direction perpendicular to the joint surfaces SW.
(c) The first contact portion 32a contacting against the upper surface of the first rib R1 is separated from the upper holder 32, and the second contact portion 33a contacting against the lower surface of the second rib R2 is separated from the lower holder 33. Thereby, a set pressure is applied to the first rib R1 and the second rib R2 at a set timing.

According to the configuration of this alternative embodiment (c), for example, when the first opening portion S1 and the second opening portion S2 are pressure-bonded to each other by applying the pressure between the upper holder 32 and the lower holder 33 at the time of the heat welding, a pressure different from the pressure at the time of the heat welding can be applied to the first pressure surface R1p of the first rib R1 and the second pressure surface R2p of the second rib R2.

In order to apply the different pressure to the first rib R1 and the second rib R2 in this manner, the first contact portion 32a may be supported in a biased state by a spring or the like in such a way as to protrude from the upper holder 32, and the second contact portion 33a may be supported in a biased state by a spring or the like in such a way as to protrude upward from the lower holder 33.

In this configuration, after the pressure applied to the upper housing 10 and the lower housing 20 is released, the pressure can also continue to be applied to the first pressure surface R1p of the first rib R1 and the second pressure surface R2p of the second rib R2 for a set time.

This alternative embodiment (c) may also include a configuration in which the rib R is formed at only one of the upper housing 10 and the lower housing 20. Thus, even when the rib R is formed at only one of the upper housing 10 and the lower housing 20, the contact structure is switchable between a state of contacting against the rib R and a state of being separated from the rib R.

(d) The first thickness T1 of the lower end of the first outer wall portion 12 may be larger than the second thickness T2 of the upper end of the second outer wall portion 22, or the first thickness T1 and the second thickness T2 may be equal to each other.

The configuration disclosed in each of the above-described embodiments (including the alternative embodiments, which applies to the following) can be applied in combination with the configuration disclosed in another of the embodiments, as long as a contradiction does not occur. The embodiments disclosed in this description are merely examples, and the embodiments of this disclosure are not limited to these, and can be appropriately improved or modified within the scope that does not deviate from the object of this disclosure.

In the above-described embodiments, the following configurations are presented.
(1) A manifold M includes a first housing (upper housing 10) and a second housing (lower housing 20). The first housing 10 forms a first opening portion S1. The second housing 20 forms a second opening portion S2. Each joint surface SW of the first opening portion S1 and the second opening portion S2 is welded to each other. Thereby, the first housing 10 and the second housing 20 are integrated with each other, and form a housing MH including a fluid space (flow passage chamber LS) inside. The housing MH includes a rib R formed on at least one of an outer peripheral side of an opening edge of the first opening portion S1 and an outer peripheral side of an opening edge of the second opening portion S2. The rib R protrudes outward along a surface parallel to the joint surface SW.

Even in a condition that one of the first housing (upper housing 10) and the second housing (lower housing 20) is deformed and the first opening portion S1 and the second opening portion S2 are not in proper close contact with each other, for example, pressure along a direction of pressure-bonding the first opening portion S1 and the second opening portion S2 to each other can be applied to the rib R at a time of joining by the heat welding. Applying the pressure in this manner enables the welding in a state where the first opening portion S1 and the second opening portion S2 are in proper close contact with each other. Thus, a sufficient welded area can be secured. Thereby, even when the joint surfaces SW of the members (first housing and second housing) constituting the housing reduces precision, the manifold whose weld strength is prevented from being reduced can be achieved.

(2) In the manifold M according to (1), a first rib R1 and a second rib R2 may be each provided as the rib R. The first rib R1 may protrude outward from the outer peripheral side of the opening edge of the first opening portion S1. The second rib R2 may protrude outward from the outer peripheral side of the opening edge of the second opening portion S2.

According to this, at a time of welding the first opening portion S1 of the first housing (upper housing 10) and the second opening portion S2 of the second housing (lower housing 20) to each other, contact members are made to contact with both the first rib R1 and the second rib R2, and the force is thus applied in a direction (pressure-bonding direction) perpendicular to the joint surface SW. Thereby, at a position near the first opening portion S1 and the second opening portion S2, the force can be applied in the direction of making the first opening portion S1 and the second opening portion S2 closely contact with each other. Thus, the reliable joining can be achieved.

(3) In the manifold M according to (2), the first rib R1 and the second rib R2 may face each other in a direction perpendicular to the joint surface SW.

Since the first rib R1 and the second rib R2 face each other in the direction perpendicular to the joint surface SW, applying the pressure to the first rib R1 and the second rib R2 enables the force to be concentrated on the joint surface SW of the first opening portion S1 and the joint surface SW of the second opening portion S2. Thus, the reliable joining can be achieved.

(4) A method for manufacturing a manifold includes a heating step (I) and a pressure-bonding step (II). The heating step (I) includes heating a joint surface SW of a first opening portion S1 in a first housing (upper housing 10) and a joint surface SW of a second opening portion S2 in a second housing (lower housing 20) in such a way that a temperature of each of the joint surfaces SW becomes a melting temperature. The pressure-bonding step (II) includes pressure-bonding the joint surface SW of the first opening portion S1 and the joint surface SW of the second opening portion S2 to each other after the heating step (I). The pressure-bonding step (II) includes applying force to a rib R in a direction perpendicular to the joint surface.

According to this, after the heating step (I) of heating the first opening portion S1 and the second opening portion S2 in such a way that a temperature of each of the opening portions S1 and S2 becomes the melting temperature, the force is applied to the rib R in the pressure-bonding direction at the pressure-bonding step (II) of causing the opening portions S1 and S2 to contact with each other in a state of being pressed against each other. Thereby, the first opening portion S1 and the second opening portion S2 are made to closely contact with each other. Thus, the strong welding can be achieved.

(5) In the method for manufacturing the manifold according to (4), at the pressure-bonding step (II), a restriction member 34 may be arranged adjacent to a protrusion end of the rib R. On an outer side of the housing MH from a welded portion between the first opening portion S1 and the second opening portion S2, the restriction member 34 may contact with flash 35 leaking from the welded portion.

According to this, even when a lower end surface of a first outer wall portion 12 and an upper end surface of a second outer wall portion 22 strongly contact with each other at the pressure-bonding step (II), and a part of resin of the end surface is thereby caused to flow out from the joined portion to an outside and thus form the flash 35, the flash 35 contacts with the restriction member 34. Thereby, a protrusion amount of the flash 35 is suppressed.

### [Industrial Applicability]

This disclosure can be used in a manifold and a method for manufacturing the manifold.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A manifold (M) comprising a first housing (10) forming a first opening portion (S1) and a second housing (20) forming a second opening portion (S2), each joint surface (SW) of the first opening portion (S1) and the second opening portion (S2) being welded to each other, thereby integrating the first housing (10) and the second housing (20) with each other and forming a housing (MH) including a fluid space (LS) inside, wherein
the housing (MH) includes a rib (R) formed on at least one of an outer peripheral side of an opening edge of the first opening portion (S1) and an outer peripheral side of an opening edge of the second opening portion (S2), and the rib (R) protrudes outward along a surface parallel to the joint surface (SW).

2. The manifold (M) according to Claim 1, wherein
a first rib (R1) protruding outward from the outer peripheral side of the opening edge of the first opening portion (S1) and a second rib (R2) protruding outward from the outer peripheral side of the opening edge of the second opening portion (S2) are each provided as the rib (R).

3. The manifold (M) according to Claim 2, wherein
the first rib (R1) and the second rib (R2) face each other in a direction perpendicular to the joint surface (SW).

4. A method for manufacturing the manifold according to any one of Claims 1 to 3, comprising:
a heating step (I) of heating the joint surface (SW) of the first opening portion (S1) in the first housing and the joint surface (SW) of the second opening portion (S2) in the second housing in such a way that a temperature of each of the joint surfaces (SW) becomes a melting temperature; and
a pressure-bonding step (II) of pressure-bonding the joint surface (SW) of the first opening portion (S1) and the joint surface (SW) of the second opening portion (S2) to each other after the heating step (I), wherein
the pressure-bonding step (II) includes applying force to the rib (R) in a direction perpendicular to the joint surfaces.

5. The method for manufacturing the manifold according to Claim 4, wherein,
at the pressure-bonding step (II), a restriction member (34) is arranged adjacent to a protrusion end of the rib (R) in such a way that, on an outer side of the housing (MH) from a welded portion between the first opening portion (S1) and the second opening portion (S2), the restriction member (34) can contact with flash (35) leaking from the welded portion.
